# FASCICULE DE BREVET EUROPEEN

(11) **EP 4 446 827 B1**
(45) Date de publication et mention de la délivrance du brevet: **02.12.2026**
(21) Numéro de dépôt: 24164437.6
(22) Date de dépôt: 19.03.2024
(51) Int. Cl.: G05B 15/02, E04F 10/00, E06B 9/00

(54) **PROCÉDÉ DE GESTION D'UNE INSTALLATION DOMOTIQUE**
VERFAHREN ZUR VERWALTUNG EINER HEIMAUTOMATISIERUNGSANLAGE
METHOD FOR MANAGING A HOME AUTOMATION INSTALLATION

(30) Priorité: 07.04.2023 FR 2303483
(43) Date de publication de la demande: 16.10.2024
(73) Titulaire: Somfy Activites SA, 74300 Cluses (FR)
(72) Inventeur: BERNABEU, Noé, 74300 Cluses (FR)
(74) Mandataire: Germain Maureau

(56) Documents cités:
- EP-A1- 3 203 813
- EP-A2- 2 682 823
- US-A1- 2006 207 730
- US-A1- 2015 234 369

## Description

L'invention concerne un procédé et un terminal pour une gestion d'un confort thermique intérieur d'un bâtiment, comprenant une installation domotique muni d'au moins une protection solaire motorisée, une unité de gestion d'une position prise par la protection solaire au cours du temps, et au moins un dispositif de mesure d'une température intérieure du bâtiment.

Un bâtiment à usage domestique ou professionnel dispose d'un ensemble d'éléments actifs, comme des dispositifs de climatisation ou de chauffage, ou passifs, comme par exemple des protections solaires telles que des volets roulants ou des stores, dont un comportement, notamment par le biais d'un pilotage automatique, a une influence forte sur une évolution d'un confort thermique, c'est-à-dire une température intérieure du bâtiment, et d'un confort visuel intérieur.

On appelle pilotage d'une protection solaire une modification des positions de la protection solaire au cours du temps entre une position déployée ou déroulée dans laquelle elle arrête au moins une partie d'un rayonnement solaire, et une position repliée ou enroulée dans laquelle elle arrête une partie moins importante du rayonnement solaire.

Il est difficile, pour un utilisateur qui n'est pas spécialiste des transferts thermiques, de prévoir un impact du pilotage, ou d'une régulation, des éléments actifs et passifs, tel qu'un réglage du chauffage ou une ouverture d'un volet, sur l'évolution de la température intérieure.

Il existe des règles basées sur des variations climatiques extérieures permettant de définir le pilotage des éléments actifs et/ou passifs pour maintenir un confort thermique satisfaisant à l'intérieur du bâtiment. Toutefois, ces variations climatiques extérieures sont difficiles à anticiper de sorte que les règles ne tiennent pas compte de l'inertie thermique.

D'autre part, ces éléments actifs et passifs ont des influences combinées ou antagonistes sur le confort et sur la consommation électrique du bâtiment. Leur pilotage dépend notamment de la saison, dans le sens où on peut vouloir privilégier des apports solaires ou au contraire s'en préserver. La difficulté est de gérer les variabilités annuelles et intra-saisonnières.

En particulier, le pilotage des protections solaires, c'est-à-dire une commande d'ouverture ou de fermeture de la protection solaire, en interagissant directement avec l'extérieur a un impact direct et important sur le confort thermique et visuel. Ainsi, les consommations énergétiques liées au chauffage et à la climatisation en dépendent directement.

Un pilotage, ou une gestion, manuelle n'est pas optimale d'un point de vue énergétique car il est difficile pour un occupant du bâtiment de savoir exactement quelle est la position idéale de la protection solaire à chaque instant, et à quel moment il doit l'ouvrir ou la fermer. De plus, en cas d'inoccupation du bâtiment ou lorsque les occupants dorment, les mouvements sont impossibles contrairement à un pilotage automatique qui assure en continu le positionnement des protections. Il est donc important de pouvoir gérer le pilotage automatique de manière optimale. Il est connu de mettre en œuvre une gestion ou un pilotage automatisé des protections solaires grâce à un ensemble de capteurs, par exemple de capteurs intérieurs et extérieurs de température ou des capteurs d'éclairement extérieurs, en lien avec une centrale domotique. Celle-ci peut également récupérer des données ou des prévisions météorologiques pour affiner la gestion automatisée. Toutefois, cela entraine une multiplication les informations à traiter.

Des modes de pilotage sont déterminés sur la base des informations récupérées. Généralement plusieurs modes de pilotage sont proposés : un mode favorisant des apports solaires dit scénario Hiver, et un mode de protection solaire dit scénario Été (pour des situations dans l'hémisphère Nord). Dans la version la plus simple, ces modes sont lancés sur la base d'une horloge donnant une date ou d'une information fournie par un capteur d'ensoleillement en façade.

Des périodes d'inter-saison, c'est-à-dire de transition entre le scénario Hiver et le scénario Eté sont plus difficiles à traiter, de même que des journées d'été ou d'hiver avec des conditions de chaud ou froid inhabituels. Celles-ci génèrent souvent des situations d'inconfort thermique pour les occupants, qui doivent être palliées par la mise en route des éléments actifs de chauffage ou de climatisation, induisant une consommation énergétique supplémentaire.

Le brevet EP2682823 propose un procédé de détermination des conditions climatiques d'une journée basé sur l'obtention d'une température extérieure au bâtiment au lever du soleil. Les conditions climatiques sont déterminées pour la journée en fonction d'une comparaison de la température extérieure obtenue au lever du soleil avec différents seuils. Ce procédé permet ainsi de déterminer des conditions climatiques hivernales, automnales, printanières ou estivales. La gestion des protections solaires est adaptée pour privilégier ou limiter au juste niveau les apports solaires en fonction des conditions climatiques déterminées.

Cette solution a l'avantage d'être simple à mettre en oeuvre et nécessite un faible nombre de données pour fonctionner. Cependant, cette solution ne donne pas entièrement satisfaction car elle est trop dépendante de la température extérieure qui n'est pas la donnée la plus fiable pour estimer les besoins thermiques d'un bâtiment et le positionnement des protections solaires adéquat. En particulier, deux bâtiments avec des niveaux d'isolation ou de surface vitrée inégaux auront des besoins thermiques et énergétiques très différents avec des conditions climatiques extérieures identiques.

Le brevet EP3087447 décrit un procédé de modélisation prédictive du confort intérieur à venir d'un bâtiment en fonction de prévisions météo, de mesure de capteurs et d'un état de fonctionnement d'un élément actif. La modélisation utilise des données représentatives des apports thermiques à l'intérieur du bâtiment et/ou des échanges thermiques du bâtiment avec l'extérieur; ces données représentatives pouvant comprendre une estimation d'un changement des apports ou échanges thermiques correspondant à l'ouverture ou la fermeture d'une protection solaire. US 2006/207730 décrit la commande automatique de protections solaires, et plus spécifiquement des systèmes d'occultation automatisés qui mettent en œuvre un ou plusieurs algorithmes pour assurer une protection solaire appropriée contre la pénétration directe du rayonnement solaire.US2015234369A1 décrit la commande de l'éclairage, des protections solaires et de la température, et plus spécifiquement un contrôleur ayant une architecture flexible permettant de commander ces éléments.

Cette solution repose sur une modélisation du confort spécifique au bâtiment concerné. Cependant elle met en œuvre des calculs complexes pour la construction d'un modèle prédictif et fait appel à une quantité importante de données.

L'invention a pour but de remédier à tout ou partie des inconvénients précités en assurant un pilotage automatique d'une protection solaire qui soit simple et optimisée toute l'année de façon adaptée au bâtiment concerné, quelles que soient les conditions climatiques et thermiques extérieures.

Autrement dit, la solution proposée permet une gestion des protections solaires adaptée chaque jour aux conditions climatiques, les scenarii Hiver et Été n'étant plus que deux scenarii extrêmes (en hiver, favoriser 100% des apports solaire, en Été limiter 100% des apports solaires), d'un ensemble de modes définissant des positions des protections solaires favorisant ou limitant les apports solaires au moins partiellement. L'invention permet donc un pilotage des protections solaires sur la base d'un mode de pilotage indépendant de la « saison » au sens du calendaire, mais déterminé en fonction des conditions climatiques extérieures et en fonction des plages de température de régulation des éléments actifs, et donc en fonction de la température intérieure qui en résulte.

L'invention a pour objet un procédé de gestion d'une installation domotique d'un bâtiment conforme à la revendication 1

L'étape de pilotage a pour objet de piloter, c'est-à-dire modifier une position, de la protection solaire au cours d'une période de temps en fonction d'un mode de pilotage, et plus particulièrement au cours d'une première période de temps en fonction d'un premier mode de pilotage. Le premier mode de pilotage prend en compte une première valeur d'un paramètre de contrôle.

Le paramètre de contrôle est une grandeur influencée par l'ensemble des éléments qui agissent sur la température intérieure au cours de la première période de temps, comme par exemple la position prise par la protection solaire, mais également par une inertie et des performances thermiques du bâtiment, des conditions climatiques extérieures, d'une plage de régulation d'un élément actif... Le paramètre de contrôle est réévalué pour la deuxième période de temps en fonction des variations de la température intérieure, notamment des variations constatées sur la première période de temps.

L'étape de mesure enregistre pendant une sous-période de la première période de temps la température intérieure du bâtiment donnée par l'au moins un capteur de température. La sous-période est donc égale ou inférieure à la première période de temps.

L'étape d'évaluation évalue, après la sous-période de temps, une valeur de décalage sur la base d'au moins un écart entre la température intérieure et une plage de température de confort. La plage de température de confort est un intervalle de température défini par un utilisateur du bâtiment. Un but du pilotage de l'au moins une protection solaire est de maintenir la température intérieure du bâtiment dans cette plage de valeur.

La plage de température de confort est comprise dans l'intervalle [16°, 30°], par exemple l'intervalle [19°, 25°].

L'étape d'ajustement détermine le mode de pilotage qui sera mis en œuvre sur une deuxième période de temps successive à la première période de temps. Pour cela, l'étape de d'ajustement modifie l'au moins un paramètre de contrôle du premier mode de pilotage en fonction de la valeur de décalage. Le mode de pilotage de la deuxième période dépend donc directement du mode de pilotage de la première période.

L'invention a ainsi pour effet d'ajuster à chaque période de temps le mode de pilotage pour s'adapter aux conditions intérieures mesurées sur au moins une partie de la période de temps précédente. Le mode de pilotage ne correspond pas ainsi à une saison, mais à un niveau qui varie avec un glissement du réglage de l'au moins un paramètre vers un minimum ou un maximum lorsque la température intérieure s'écarte de la plage de température de confort établie pour l'installation. L'ajustement du mode de pilotage de manière glissante permet de s'adapter aux changements climatiques entre saisons mais également d'un jour à l'autre à l'intérieur d'une même saison.

L'invention peut également présenter une ou plusieurs des caractéristiques suivantes prises seules ou en combinaison.

Selon un mode de réalisation, le procédé de gestion comprend une étape d'initialisation dans laquelle au moins une valeur d'initialisation du paramètre de contrôle est déterminée.

Selon un mode de réalisation, la valeur d'initialisation du paramètre de contrôle correspond à un minimum du paramètre de contrôle. De manière alternative, la valeur d'initialisation du paramètre de contrôle correspond à un maximum du paramètre de contrôle. De manière alternative, la valeur d'initialisation du paramètre de contrôle correspond à une valeur moyenne ou médiane entre le minimum et le maximum du paramètre de contrôle. La valeur d'initialisation du paramètre de contrôle peut également être arbitraire entre le minimum et le maximum du paramètre de contrôle et saisie par un installateur ou un utilisateur.

Selon un mode de réalisation, la valeur d'initialisation du paramètre de contrôle est déterminée en fonction d'une date calendaire de l'initialisation.

Selon un mode de réalisation, la première période de temps et la sous-période de la première période de temps sont égales à 24h.

Ainsi un nouveau mode de pilotage est défini quotidiennement, par ajustement par rapport au mode de pilotage du jour précédent. Cette fréquence permet de prendre en compte les variations de température intérieure sur une journée complète.

Selon un mode de réalisation, une étape de pilotage sur la deuxième période de temps intervient à partir de la fin de la première période de temps.

Ainsi un mode de pilotage est déterminé pour une période de temps complète et on évite tout ajustement intempestif qui interviendrait pendant la période. Ceci permet d'éviter de surréagir à chaque dépassement d'un seuil de température pendant la période prédéfinie. Un écart négatif et un écart positif de température déterminés sur une même période peuvent ainsi se compenser à l'issue de la période.

Ainsi, on détermine un nombre discret et ordonné de valeurs du paramètre de contrôle. Autrement dit, le paramètre de contrôle ne peut pas prendre n'importe quelle valeur, mais uniquement celles listées. Chaque valeur du paramètre de contrôle correspond à au moins un mode de pilotage. Il y a donc au moins autant de modes de pilotage que de valeurs dans l'ensemble des valeurs du paramètre de contrôle, par exemple, il y a deux modes de pilotage pour chaque valeur du paramètre de contrôle.

Dans la suite de la description, pour plus de simplicité, on considère qu'il y a un seul mode de pilotage pour chaque valeur du paramètre de contrôle.

L'ensemble des valeurs du paramètre de contrôle étant ordonné ou classé, les modes de pilotage associés sont donc également classés ou ordonnés.

La valeur de décalage correspond à la différence ou au nombre d'intervalle entre deux valeurs de l'ensemble discret de valeurs du paramètre de contrôle. La valeur de décalage détermine la nouvelle valeur du paramètre de contrôle, c'est-à-dire le nouveau mode de pilotage. Lors de l'étape d'ajustement, le mode de pilotage de la première période, et donc la valeur du paramètre de contrôle associé, correspond au mode de pilotage, ou à la valeur du paramètre de contrôle, de référence et la valeur de décalage indique le glissement sur l'ensemble discret de valeurs vers la nouvelle valeur ou le nouveau mode de pilotage.

Selon un mode de réalisation, les valeurs de l'ensemble discret de valeurs du paramètre de contrôle sont ordonnées de manière croissante.

De manière alternative, les valeurs de l'ensemble discret de valeurs du paramètre de contrôle sont ordonnées de manière décroissante.

Ainsi, le paramètre de contrôle varie entre deux valeurs extrêmes.

Selon un mode de réalisation, la valeur de décalage correspond à un décalage compris entre -5 intervalles et + 5 intervalles, et de préférence entre -2 intervalles et +2 intervalles dans l'ensemble discret ordonné de valeurs du paramètre de contrôle.

Ainsi, le paramètre de contrôle ou le mode de pilotage, s'adapte plus rapidement aux changements climatiques.

Selon un mode de réalisation, l'ensemble discret ordonné de valeurs du paramètre de contrôle comprend entre 5 et 15 valeurs, de préférence 10 valeurs.

Ainsi, le nombre de valeur pouvant être pris par le paramètre de contrôle est fini.

Le nombre de valeur du paramètre de contrôle et donc le nombre de mode de pilotage diffère assez largement du nombre de saisons et un ajustement plus fin peut avoir lieu entre les modes extrêmes.

Il y a une infinité de cas possibles pour passer de la première valeur à la dernière valeur de l'ensemble discret ordonné de valeur du paramètre de contrôle, et donc un choix libre du nombre de valeur du paramètre de contrôle possibles. Toutefois, un choix trop important de valeur ou des règles supplémentaires complexes définissant le passage du paramètre de contrôle d'une valeur vers une autre risquerait d'apporter trop d'inertie dans l'adaptation aux changement climatiques environnants. Un choix d'une dizaine de valeurs, par exemple de 10 valeurs propose une limite optimale pour s'adapter aux changements climatiques quotidiens et nécessite des règles très simples pour le réajustement du paramètre de contrôle.

Le nouveau mode de pilotage est déterminé, par glissement sur la liste des modes vers l'un des modes extrêmes. Une inertie du glissement permet à la fois de prendre en compte des changements de température extérieur d'un jour à l'autre et des changements de température extérieure à plus large échelle de temps.

Selon un mode de réalisation, le paramètre de contrôle varie uniformément sur l'ensemble discret de valeurs du paramètre de contrôle.

Ainsi, une valeur de décalage de 2 intervalles modifie deux fois plus le paramètre de contrôle qu'une valeur de décalage de 1 intervalle.

Ainsi, le paramètre de contrôle variant entre deux modes de pilotage est la quantité d'apports solaire autorisé.

Par exemple, un des modes extrêmes, par la suite appelé mode Hiver, correspond à un mode dans lequel on favorise au maximum les apports solaires pour chauffer l'intérieur du bâtiment par un positionnement approprié de la protection solaire, majoritairement replié ou relevé. Dans l'autre mode extrême, par la suite appelé mode Eté, on inhibe au maximum les apports solaires, par un positionnement approprié de la protection solaire, majoritairement déroulé ou déployé. Les modes de pilotage intermédiaires présentent des pondérations dégressives entre ces deux modes extrêmes.

Selon un mode de réalisation, le mode de pilotage correspond à une quantité d'apports solaires autorisés α, définis en relation avec le paramètre de contrôle.

Selon un mode de réalisation, la valeur de décalage est déterminée en fonction d'au moins une marge de réaction correspondant à un écart de température.

La marge de réaction correspond à un écart de température permettant de définir une sous-plage de la plage de température de confort. Ainsi, le pilotage de la protection solaire peut être plus précis.

Selon un mode de réalisation, la valeur de décalage est déterminée en fonction d'au moins un écart entre la température intérieure du bâtiment et la plage de température de confort augmentée ou diminuée de l'au moins une marge de réaction.

Par exemple, en considérant que les modes de pilotage sont classés du mode Hiver vers le mode Eté, une valeur de décalage négative et de coefficient 2, soit une valeur de décalage de - 2 intervalles est considérée si un minimum de la température intérieure passe en deçà de la valeur minimum de la plage de température de confort.

Une valeur de décalage négative et de coefficient 1, soit une valeur de décalage de - 1 intervalle est considérée si le minimum de température intérieure est compris entre la valeur minimum de la plage de température de confort et cette valeur minimum augmentée de la marge de réaction. Une valeur de décalage positive et de coefficient 1, soit une valeur de décalage de + 1 intervalle est considérée si le maximum de température intérieure est compris entre la valeur maximum de la plage de température de confort diminuée de la marge de réaction et la valeur maximum de la plage de température de confort.

Une valeur de décalage positive et de coefficient 2, soit une valeur de décalage de + 2 intervalles est considérée si un maximum de température intérieure passe au-dessus de la valeur maximum de la plage de température de confort.

Selon un mode de réalisation, la valeur de décalage est égale à -1 intervalle lorsque la température intérieure du bâtiment est comprise entre la valeur minimum de la plage de température de confort augmentée d'une première marge de réaction et la température maximum de la plage de température de confort diminuée d'une deuxième marge de réaction.

Par exemple, une valeur de décalage négative et de coefficient 1, soit une valeur de décalage de - 1 intervalle est considérée si le minimum de température intérieure est supérieur à la valeur minimum de la plage de température de confort augmentée d'une première marge de réaction et que le maximum de température intérieure est inférieur à la valeur maximum de la plage de température de confort diminuée d'une deuxième marge de réaction.

Ainsi, lorsque le mode de pilotage permet de conserver la température intérieure du bâtiment dans la plage de température de confort, la valeur de décalage négative et de coefficient 1, soit une valeur de décalage de -1 intervalle permet de favoriser une plus grande quantité d'apport solaire et donc un confort intérieur.

Selon un mode de réalisation, la deuxième marge de réaction est égale à deux fois la première marge de réaction.

Pour chacune de ces considérations, le mode de pilotage est réévalué pour la prochaine période de temps.

Ainsi, on prend en compte un positionnement de la température intérieure par rapport à la plage de température de confort, et plus précisément, des déviations par rapport à un minimum de température intérieure et d'un maximum de température intérieure. On prend également en compte de manière plus précise une déviation plus importante par rapport aux températures de confort, sur une même journée.

Selon un mode de réalisation, la valeur de décalage est pondérée par au moins un paramètre extérieur, notamment un paramètre de prévision météorologique, un paramètre de température extérieur, un paramètre de rayonnement solaire.

On optimise ainsi une performance du procédé, en considérant également dans la détermination de la valeur de décalage des paramètres autres que la température intérieure, qui peut potentiellement être influencée par des éléments thermiques tels que le chauffage ou la climatisation. Toutefois, l'utilisation de la seule température intérieure permet de bénéficier d'un mode de pilotage adapté basé sur une donnée facile à récupérer.

Selon un mode de réalisation, l'installation domotique comprend également un élément actif de chauffage ou de climatisation régulé sur une plage de température de régulation, la plage de température de confort étant incluse dans la plage de température de régulation.

Autrement dit, lors d'une mise en route d'un élément actif de chauffage, la valeur minimum de la plage de température de confort devra être égale ou supérieure à la valeur minimum de la plage de température de régulation. Pour un élément actif de climatisation, la valeur maximum de la plage de température de confort devra être inférieure ou égale à la valeur maximum de la plage de température de régulation.

Selon un mode de réalisation, la plage de température de confort correspond à la plage de température de régulation.

Ainsi, l'adaptation du mode de pilotage n'est pas perturbée par une mise en route d'un élément actif qui vient maintenir la température intérieure du bâtiment dans la plage de température de régulation.

Selon un mode de réalisation, pour chaque période de temps, au moins le mode de pilotage, et/ou la première et/ou la deuxième valeur de paramètre de contrôle, et/ou la valeur de décalage sont archivés.

En outre, des données relatives à la température extérieure (et notamment d'illuminance extérieure (moyenne horaire)) peuvent également être archivées en fin de période.

Ainsi, on construit au fur et à mesure des jours une base de données concernant le bâtiment et son inertie thermique.

Selon un mode de réalisation, le procédé de gestion comprend une première phase de fonctionnement, puis une deuxième phase de fonctionnement dans lequel le mode de pilotage est déterminé en fonction des valeurs archivées et d'une température extérieure prévisionnelle. La base de données réalisée lors du fonctionnement selon la première phase permet de construire un modèle de régression (un lien numérique) par apprentissage capable de prédire selon le mode de pilotage de la première période de temps et des conditions climatiques à venir, le mode de pilotage le plus performant pour la deuxième période de temps.

L'invention porte également sur un terminal d'une installation domotique mettant en œuvre un procédé selon l'invention.

L'invention sera mieux comprise, grâce à la description ci-après, qui se rapporte à un mode de réalisation selon la présente invention, donné à titre d'exemple non limitatif et expliqué avec référence aux dessins schématiques annexés, dans lesquels :
[FIG. 1] est une représentation schématique d'un bâtiment comprenant une installation domotique mettant en œuvre un procédé conforme à l'invention;
[FIG. 2] est une coupe schématique transversale d'une protection solaire de l'installation domotique de la figure 1,
[FIG. 3] est une vue schématique en perspective de la protection solaire illustrée à la figure 2,
[FIG. 4] est un diagramme illustrant le procédé selon l'invention,
[FIG. 5] est un diagramme d'évaluation d'une valeur de décalage selon l'invention,
[FIG. 6] est un schéma illustrant différents modes de pilotage selon l'invention.

La solution proposée ici est relative à une gestion automatique d'une position d'une protection solaire au cours du temps permettant d'agir sur un confort thermique d'une zone d'un bâtiment.

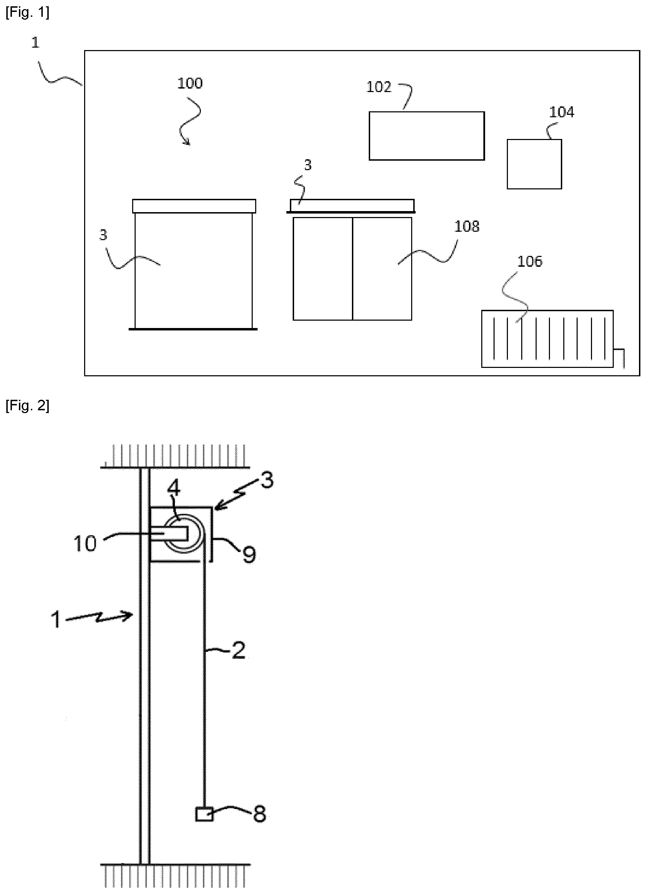

Comme illustré à la figure 1, un bâtiment 1 comprend une installation domotique 100 comprenant une protection solaire motorisée 3. L'installation domotique 100 comprend une unité de gestion 102 d'une position prise par la protection solaire 3 au cours du temps.

L'installation comprend également au moins un dispositif de mesure 104 de la température intérieure T du bâtiment, notamment d'une pièce du bâtiment 1 associée à la protection solaire 3, c'est-à-dire dans une pièce du bâtiment 1 comprenant au moins une ouverture 108 qui peut être masquée ou non ou partiellement par la protection solaire 3. Le dispositif de mesure 104 comprend également une mémoire dans laquelle peuvent être mémorisées des données de température intérieure T à intervalles sensiblement réguliers sur une période prédéfinie, par exemple sur 24h.

D'autres paramètres associés au confort intérieur du bâtiment 1 peuvent également être mesurés, notamment un degré de luminosité, un degré d'hygrométrie ou une grandeur composite définie comme une fonction des grandeurs précédemment citées, ou une prévision de ces paramètres.

Selon le mode de réalisation présenté, l'installation 100 comprend un dispositif actif 106 pour la fourniture d'apports thermiques à l'intérieur du bâtiment 1, tel que par exemple un chauffage, une climatisation ou une pompe à chaleur réversible. Dans un mode de fonctionnement de l'installation 100, le dispositif actif fonctionne de manière indépendante par rapport à l'unité de gestion 102. Dans un mode de fonctionnement alternatif, l'unité de gestion et le dispositif actif partagent un certain nombre de composantes, par exemple le dispositif de mesure de la température intérieure peut être commun au dispositif actif et à l'unité de gestion.

La protection solaire 3 est installée à l'extérieur ou à l'intérieur du bâtiment, en particulier à proximité d'une ouverture 108 du bâtiment. Une ouverture 108 est par exemple une fenêtre, une porte-fenêtre ou une porte vitrée. La protection solaire est avantageusement un store d'intérieur ou d'extérieur en toile ou muni de lames orientables. La présente invention s'applique cependant à tous les types de protection solaire.

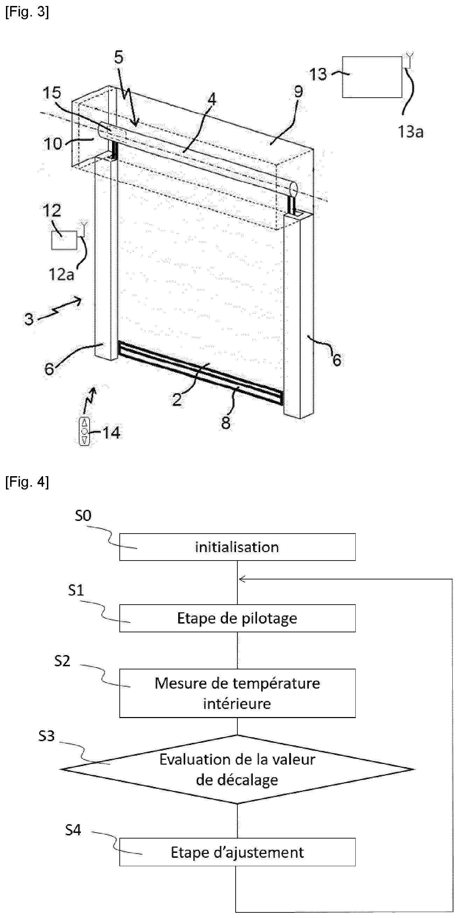

Comme représenté sur les figures 2 et 3, la protection solaire 3 comprend une toile 2 fixée par une de ses extrémités sur un tube d'enroulement 4, disposé à l'intérieur d'un coffre 9 et entraîné par un actionneur électromécanique 5, et par l'autre extrémité à une barre lestée 8. La protection solaire 3, et plus particulièrement la toile 2 est mobile entre une position enroulée ou repliée, en particulier haute, dans laquelle la toile 2 découvre l'ouverture 108 au niveau de laquelle la protection solaire est positionnée, et une position déroulée ou déployée, en particulier basse, dans laquelle la toile 2 couvre l'ouverture et bloque ainsi au moins partiellement le rayonnement solaire à travers l'ouverture 108. Le déploiement de la toile 2 peut être guidé par des coulisses 6.

De manière connue, l'actionneur électromécanique 5 est fixé sur une structure porteuse 9 liée au bâtiment 1 et inséré dans le tube d'enroulement 4 pour entraîner celui-ci en rotation de sorte à dérouler ou enrouler la toile 2.

Dans le cas d'une protection solaire de type store à lames, les différentes lames du store sont de préférence suspendues via des cordons destinés à être enroulés sur le tube d'enroulement ou déroulés du tube d'enroulement de sorte à replier ou déployer l'écran.

L'actionneur électromécanique 5 est commandé par une unité de commande locale 12 pouvant être munie d'une antenne 12a. L'unité de commande locale 12 prend la forme d'un interrupteur mural, ou d'une télécommande.

L'installation 100 peut également comprendre une unité de commande centrale 13 pouvant être munie d'une antenne 13a, qui assure un rôle de passerelle entre l'installation 100 et un réseau Internet extérieur à l'installation. L'unité de gestion 102 peut être une unité de commande locale 12 ou centrale 13.

L'actionneur électromécanique 5 est configuré pour exécuter des commandes de déplacement, notamment de déploiement ou de repli, des protections solaires 3, les commandes pouvant être émises, notamment, par l'unité de commande locale 12 ou l'unité de commande centrale 13, qui font partie de l'installation 100.

L'actionneur électromécanique 5 comprend un moteur électrique 10 et une unité électronique de contrôle 15 apte à mettre en fonctionnement le moteur électrique 10 de l'actionneur électromécanique 5, et, en particulier, permettre l'alimentation en énergie électrique du moteur électrique 10.

L'unité électronique de contrôle 15 comprend un module de communication, en particulier de réception d'ordres de commande, les ordres de commande étant émis par l'unité de commande locale 12 ou l'unité de commande centrale 13, par exemple par le biais d'ordres de commande radioélectriques.

Une télécommande 14, pouvant être un type d'unité de commande locale, et pourvue d'un clavier de commande, qui comprend des moyens de sélection et éventuellement d'affichage, permet, en outre, à un utilisateur d'intervenir sur l'actionneur électromécanique 5 et/ou l'unité de commande locale 12 et/ou centrale 13.

L'installation peut également comprendre une station météorologique, non représentée, déportée à l'extérieur du bâtiment, incluant, notamment, un ou plusieurs capteurs pouvant être configurés pour déterminer, par exemple, une température extérieure, une luminosité ou encore une vitesse de vent.

L'actionneur électromécanique 5 peut comprendre une liaison vers une source d'énergie secteur ou peut comprendre un dispositif d'alimentation en énergie électrique autonome, comme par exemple un panneau photovoltaïque et/ou un dispositif de stockage d'énergie électrique.

L'installation 100, en particulier l'unité de gestion 102, et l'actionneur électromécanique 5 comprennent tous les moyens matériels et/ou logiciels de mise en œuvre du procédé de gestion objet de l'invention.

L'unité de gestion 102 comprend une unité de traitement agencée pour contenir et exécuter un produit programme d'ordinateur comprenant des portions de code de programme pour l'exécution des étapes d'un procédé de gestion de l'installation domotique 100 selon l'invention. En particulier, l'unité de gestion 102 est apte à déterminer une gestion automatique d'un positionnement de la protection solaire 3 en fonction d'un mode de pilotage préalablement sélectionné. La gestion automatique de la protection solaire 3 comprend notamment des ordres de commande de déploiement, c'est-à-dire d'ouverture, ou de repli, c'est-à-dire de fermeture de la protection solaire transmis de l'unité de gestion 102 à l'actionneur électromécanique 5 conformément au mode de pilotage sélectionné.

L'unité de gestion 102 comprend une mémoire dans laquelle peut être stockée le mode de pilotage à réaliser et un ensemble de programmes associés à différents modes de pilotage.

L'unité de gestion 102 est également agencée pour recevoir des données du dispositif de mesure 104 de température intérieure. L'unité de gestion 102 peut également recevoir des données d'état ou de position fournies par l'actionneur électromécanique 5, concernant la protection solaire 3. A ce propos, l'unité de gestion 102 comprend un module de communication.

L'unité de gestion 102 comprend également une interface utilisateur. L'interface utilisateur est agencée pour permettre une programmation éventuelle de l'unité de gestion 102.

L'unité de gestion 102 comprend en outre un élément d'affichage pour fournir une valeur de la température intérieure T et/ou une référence du mode de pilotage suite à la mise en oeuvre du procédé de gestion décrit plus loin.

L'unité de gestion 102 comprend également des éléments de mesure d'illuminance, par exemple un luxmètre ou des moyens de communication avec de tels éléments de mesure d'illuminance.

Le module de communication de l'unité de gestion 102 est également adapté pour recevoir des informations relatives à des prévisions météorologiques, par exemple par le biais d'une connexion à un réseau Internet par le biais de l'unité de commande centrale.

Optionnellement, l'unité de gestion 102 peut être encore plus performante avec l'utilisation de prédictions météorologiques de la température extérieure et du rayonnement solaire sur 24h. Le rayonnement solaire peut être déduit d'une mesure d'illuminance via un luxmètre.

Le procédé de gestion conforme à l'invention est décrit ci-dessous en relation avec les figures 4, 5 et 6.

Selon un mode de réalisation, le procédé de gestion comprend une étape d'initialisation S0, dans laquelle au moins une valeur d'initialisation i⁽⁰⁾ d'un paramètre de contrôle est déterminée.

Selon un mode de réalisation, la valeur d'initialisation du paramètre de contrôle correspond : à un minimum, un maximum du paramètre de contrôle. Elle peut être déterminée en fonction d'une date calendaire de l'initialisation du procédé de gestion, correspondre à une valeur moyenne ou médiane ou être choisie arbitrairement.

Après l'initialisation, le procédé de gestion comprend une étape de pilotage S1 sur une première période de temps J1. Sur cette première période de temps J1, les positions de la protection solaire sont déterminées en fonction d'un premier mode de pilotage M_{i(J1)} prenant en compte au moins une première valeur i^{(J1)} d'un paramètre de contrôle ou la valeur d'initialisation i⁽⁰⁾.

Le procédé de gestion comprend également une étape de mesure S2 de la température intérieure T du bâtiment pendant une sous-période J1' de la première période de temps J1. La sous-période J1' est donc égale ou inférieure à la première période de temps J1. Selon un mode de réalisation, la première période de temps J1 et la sous-période J1' de la première période de temps sont égales à 24h.

Le procédé de gestion comprend suite à l'étape de mesure S2, une étape d'évaluation S3 d'une valeur de décalage dans laquelle la valeur de décalage est déterminée en fonction d'au moins un écart entre la température intérieure T du bâtiment mesurée pendant la sous-période J1' et une plage de température de confort [T_{c}⁻, T_{c}⁺]. La plage de température de confort [T_{c}⁻, T_{c}⁺] est comprise dans l'intervalle [16°, 30°], par exemple l'intervalle [19°, 25°].

Selon un mode de réalisation, l'élément actif 106 de chauffage ou de climatisation est régulé sur une plage de température de régulation, la plage de température de confort [T_{c}⁻, T_{c}⁺] étant incluse dans la plage de température de régulation.

Selon un mode de réalisation, la plage de température de confort [T_{c}⁻, T_{c}⁺] correspond à la plage de température de régulation.

Enfin, le procédé de gestion comprend une étape d'ajustement S4 dans laquelle un deuxième mode de pilotage M_{i(J2)} pour une deuxième période de temps J2 successive à la première période de temps J1 est déterminé en prenant en compte au moins une deuxième valeur i^{(J2)} du paramètre de contrôle, l'au moins une deuxième valeur du paramètre de contrôle étant déterminée en fonction de l'au moins une première valeur du paramètre de contrôle et de la valeur de décalage.

A la fin de la première période de temps J1, l'étape de pilotage S1 est de nouveau réalisée sur la deuxième période de temps J2. Idéalement les étapes d'évaluation S3 et d'ajustement S4 sont mises en oeuvre pendant la nuit, dans une période pendant laquelle il y a peu, voire pas d'ordres de commandes mis en œuvre de manière automatique. Ainsi, les ressources de calcul peuvent être dédiées à la réalisation de ces étapes.

Selon un mode de réalisation, pour chaque période de temps, au moins le mode de pilotage et/ou la première et/ou la deuxième valeur de paramètre de contrôle, et/ou la valeur de décalage sont archivés.

Le paramètre de contrôle est une grandeur éventuellement influencée par la position prise par la protection solaire 3. Autrement dit la modification de la position prise par la protection solaire 3, et donc indirectement la température intérieure T du bâtiment au cours d'une période de temps prédéfinie, fait varier le paramètre de contrôle pour la période suivante.

Selon un mode de réalisation, le paramètre de contrôle correspond à une quantité d'apports solaires autorisés α.

Selon un mode de réalisation, le mode de pilotage correspond à une quantité d'apports solaires autorisés α, définis en relation avec le paramètre de contrôle.

Le paramètre de contrôle peut prendre des valeurs continues ou de manière alternative être sélectionnées dans un ensemble discret ordonné de valeurs du paramètre de contrôle. Autrement dit, le paramètre de contrôle ne peut pas prendre n'importe quelle valeur, mais uniquement celles listées.

Chaque valeur du paramètre de contrôle correspond à au moins un mode de pilotage. Il y a donc au moins autant de modes de pilotage que de valeurs dans l'ensemble des valeurs du paramètre de contrôle, par exemple, il y a deux modes de pilotage pour chaque valeur du paramètre de contrôle. Chaque mode de pilotage est associé à un programme différent de gestion automatique de la protection solaire. Dans la suite de la description, pour plus de simplicité, on considère qu'il y a un seul mode de pilotage pour chaque valeur du paramètre de contrôle.

Selon un mode de réalisation, les valeurs de l'ensemble discret de valeurs du paramètre de contrôle sont ordonnées de manière croissante ou de manière alternative décroissante. Ainsi, le paramètre de contrôle varie entre deux valeurs extrêmes correspondant à deux modes de pilotage extrême comme par exemple à une gestion orientée « été » (températures extérieures chaudes et besoin maximum de limiter les apports solaires dans le bâtiment) et « hiver » (températures extérieures basses et besoin maximum de favoriser les apports solaires dans le bâtiment). Les notions d'été et d'hiver s'entendent pour un climat de l'hémisphère nord, mais ne sont en aucun cas limitatives.

Les modes ne correspondent pas à proprement parler à des saisons, mais à un fonctionnement plus ou moins penchant vers l'un ou l'autre des modes extrêmes.

Selon un mode de réalisation, le paramètre de contrôle varie uniformément sur l'ensemble discret de valeurs du paramètre de contrôle.

Par la suite, on appelle indice i le numéro de la valeur de l'ensemble discret ordonné de valeurs du paramètre de contrôle, ou du mode de pilotage Mᵢ associé. Ainsi le premier mode M₁ à un indice 1, et le dernier mode Mₙ à un indice n.

Selon un mode préférentiel de l'invention, chacun des indices i de mode de pilotage Mᵢ correspond à un pourcentage d'apports solaires autorisé α. Ainsi, le mode d'indice 1 vise à favoriser au maximum les apports solaires, soit 100% d'apports solaires. Le mode d'indice n vise à limiter au maximum les apports solaires, soit 0% d'apports solaires. Chaque indice intermédiaire correspond à un coefficient d'apports solaires : [Math 1] $\frac{i}{n} ∗ 100 %$

Selon un mode de réalisation, l'ensemble discret ordonné de valeurs du paramètre de contrôle comprend entre 5 et 15 valeurs, de préférence 10 valeurs.

En considérant 10 valeurs dans l'ensemble discret ordonné de valeur, la première valeur de l'ensemble discret ordonné de valeurs du paramètre de contrôle, ou le premier mode M₁ associé, correspond à la condition la plus froide, c'est-à-dire le mode Hiver. On vise à autoriser 100% de l'énergie solaire entrante. On considère que la dernière valeur de l'ensemble discret ordonné de valeurs du paramètre de contrôle, ou le dernier mode M₁₀ associé, correspond à la condition la plus chaude, c'est-à-dire le mode Eté. On vise à autoriser 0% de l'énergie solaire entrante. Dans un mode intermédiaire, par exemple le mode de pilotage d'indice 9, on vise à autoriser 90% des apports solaires. Ainsi, plus le mode est proche de 1, plus les apports solaires seront favorisés, plus le mode est proche de 10, plus ils seront limités.

La valeur de décalage correspond au nombre d'intervalle entre deux valeurs de l'ensemble discret de valeurs du paramètre de contrôle, ou entre deux indices i. La valeur de décalage détermine la nouvelle valeur du paramètre de contrôle, c'est-à-dire le nouveau mode de pilotage, ou le nouvel indice. Lors de l'étape d'ajustement S4, le mode de pilotage M_{i(J1)} de la première période J1, et donc la valeur i^{(J1)} du paramètre de contrôle associé, correspond au mode de pilotage ou à la valeur du paramètre de contrôle, de référence, et la valeur de décalage indique le glissement sur l'ensemble discret de valeurs vers la nouvelle valeur ou le nouveau mode de pilotage.

Il y a une infinité de cas possibles pour passer de la première valeur à la dernière valeur de l'ensemble discret ordonné de valeur du paramètre de contrôle.

Selon un mode de réalisation, la valeur de décalage correspond à un décalage compris entre -5 intervalles et + 5 intervalles, et de préférence entre -2 intervalles et +2 intervalles dans l'ensemble discret ordonné de valeurs du paramètre de contrôle.

Selon un mode de réalisation, la valeur de décalage est déterminée en fonction d'au moins une marge de réaction δT_{c} correspondant à un écart de température. La marge de réaction δT_{c} correspond donc à un écart de température permettant de définir une sous-plage de la plage de température de confort [T_{c}⁻, T_{c}⁺].

Selon un mode de réalisation, la valeur de décalage est déterminée en fonction d'au moins un écart entre la température intérieure T du bâtiment et la plage de température de confort [T_{c}⁻, T_{c}⁺] augmentée ou diminuée de l'au moins une marge de réaction δT_{c}.

Pour éviter que le procédé selon l'invention ne soit perturbé par la plage de température de régulation, on va chercher à déterminer l'écart non seulement par rapport à une valeur extrême de la plage de température de confort [T_{c}⁻, T_{c}⁺], mais également par rapport à une valeur adaptée, qui diffère de chaque valeur extrême T_{c}⁻, T_{c}⁺ d'un delta de température, par exemple 1°C, appelé marge de réaction δTc. La plage de température de confort adaptée [T_{c}⁻, T_{c}⁺]' appartient à l'intervalle de la plage de température de confort [T_{c}⁻, T_{c}⁺].

Ainsi, au moins lors des périodes de chauffe ou de rafraichissement générées par l'élément actif 106 de chauffage ou de climatisation, la plage de température de confort [T_{c}⁻, T_{c}⁺] correspond généralement à la plage de température de régulation de l'élément actif 106. Ainsi, en prenant un seuil dont la valeur est décalée à l'intérieur de la plage de température de confort [T_{c}⁻, T_{c}⁺] de cette marge de réaction δTc, on garantit l'éventualité d'un ajustement du mode de pilotage indépendamment du fonctionnement de l'élément actif 106. En effet, celui-ci va influer sur la valeur de température intérieure T dès le franchissement d'une valeur extrême de la plage de température de régulation pour maintenir la température intérieure T dans la plage de température de confort [T_{c}⁻, T_{c}⁺]. Il faut donc anticiper un mode de pilotage automatique adapté de la protection solaire 3 pour économiser de l'énergie.

Ainsi T_{c}⁻ + δTc est au moins supérieure à la valeur minimum de la plage de température de régulation, par exemple au moins 1°C supérieure, et T_{c}⁺ - δTc est inférieure à la valeur maximum de la plage de température de régulation, par exemple au moins 1°C inférieure.

Par exemple, en considérant que les modes de pilotage sont classés du mode Hiver vers le mode Eté, une valeur de décalage de - 2 intervalles est considérée si un minimum Tₘᵢₙ^{(J1')} de la température intérieure T sur la sous-période J1' de la première période J1 passe en deçà de la valeur minimum T_{c}⁻ de la plage de température de confort [T_{c}⁻, T_{c}⁺]. En effet, s'il a fait plutôt froid, voire même trop froid de telle sorte que la température intérieure T est passée sous la température minimum T_{c}⁻ de la plage de température de confort [T_{c}⁻, T_{c}⁺], le procédé vise à faire glisser, éventuellement plus rapidement s'il a fait trop froid, le mode vers 0 pour favoriser d'avantage les apports solaires α que cela n'est fait avec le mode actuellement sélectionné. Une valeur de décalage de - 1 intervalle est considérée si le minimum Tₘᵢₙ^{(J1')} de température intérieure T est compris entre la valeur minimum T_{c}⁻ de la plage de température de confort [T_{c}⁻, T_{c}⁺] et cette valeur minimum augmentée de la marge de réaction T_{c}⁻+ δTc.

Une valeur de décalage de + 1 intervalle est considérée si le maximum de température intérieure Tₘₐₓ^{(J1')} est compris entre la valeur maximum T_{c}⁺ de la plage de température de confort [T_{c}⁻, T_{c}⁺] diminuée de la marge de réaction δTc et la valeur maximum T_{c}⁺ de la plage de température de confort [T_{c}⁻, T_{c}⁺].

Une valeur de décalage de + 2 intervalles est considérée si un maximum Tₘₐₓ^{(J1')} de température intérieure T passe au-dessus de la valeur maximum T_{c}⁺ de la plage de température de confort [T_{c}⁻, T_{c}⁺].

Autrement dit, s'il a fait chaud, voire trop chaud de telle sorte que la température intérieure T est passée au-dessus de la température maximum T_{c}⁺ de la plage de température de confort [T_{c}⁻, T_{c}⁺], le mode de pilotage doit glisser vers 10 pour limiter d'avantage les apports solaires.

Si aucun seuil n'est franchi, une valeur de décalage nulle est déterminée.

Il est possible également de prendre en compte d'autres évolutions de la température intérieure pour déterminer la valeur de décalage.

Selon un mode de réalisation, la valeur de décalage est égale à -1 intervalle lorsque la température intérieure T du bâtiment est comprise entre la valeur minimum T_{c}⁻ de la plage de température de confort [T_{c}⁻, T_{c}⁺] augmentée d'une première marge de réaction δTc et la température maximum T_{c}⁺ de la plage de température de confort [T_{c}⁻, T_{c}⁺] diminuée d'une deuxième marge de réaction δTc₂.

Selon un mode de réalisation, la deuxième marge de réaction δTc₂ est égale à deux fois la première marge de réaction δTc.

Une valeur de décalage de - 1 intervalle est considérée si le minimum de température intérieure Tₘᵢₙ^{(J1')} est supérieur à la valeur minimum T_{c}⁻ de la plage de température de confort [T_{c}⁻, T_{c}⁺] augmentée d'une première marge de réaction δTc et que le maximum de température intérieure Tₘₐₓ^{(J1')} est inférieur à la valeur maximum T_{c}⁺ de la plage de température de confort [T_{c}⁻, T_{c}⁺] diminuée de deux fois la marge de réaction 2δTc.

Ainsi, lorsque le mode de pilotage permet de conserver la température intérieure T du bâtiment dans la plage de température de confort [T_{c}⁻, T_{c}⁺], la valeur de décalage de -1 intervalle permet de favoriser une plus grande quantité d'apport solaire et donc un confort intérieur pour la deuxième période de temps J2. Cette valeur de décalage négative indique que le pilotage automatique est dans un mode de pilotage qui est acceptable, mais qui peut être amélioré sans dépassement des valeurs hautes de la plage de température de confort [T_{c}⁻, T_{c}⁺], par le fait d'optimiser le confort visuel, en favorisant les apports solaires.

Si la température intérieure T est restée dans la plage de confort haute comprise entre la valeur maximum T_{c}⁺ de la plage de température de confort [T_{c}⁻, T_{c}⁺] diminuée de deux marges de réaction T_{c}⁺- 2δTc et la valeur maximum T_{c}⁺ de la plage de température de confort [T_{c}⁻, T_{c}⁺] diminuée de la marge de réaction T_{c}⁺-δTc, une valeur de décalage nulle est déterminée. Le fait que la température intérieure T soit dans la plage de confort haute indique un mode de gestion automatique qui est acceptable. Si on favorise plus d'apports solaires dans le but d'améliorer le confort visuel, on risque de basculer vers une situation d'inconfort chaud. Si au contraire on cherche à diminuer la température intérieure T par un mode dont l'indice est supérieur, on pénalise le confort visuel. Dans cette situation, il est donc préférable de conserver l'indice i du mode de pilotage actuel.

Ces options permettent de prendre en compte l'information de température intérieure T dans sa globalité sur la période plutôt que simplement son évolution instantanée.

Lorsqu'un des modes extrêmes est atteint, le mode de pilotage reste fixé à la valeur extrême atteinte.

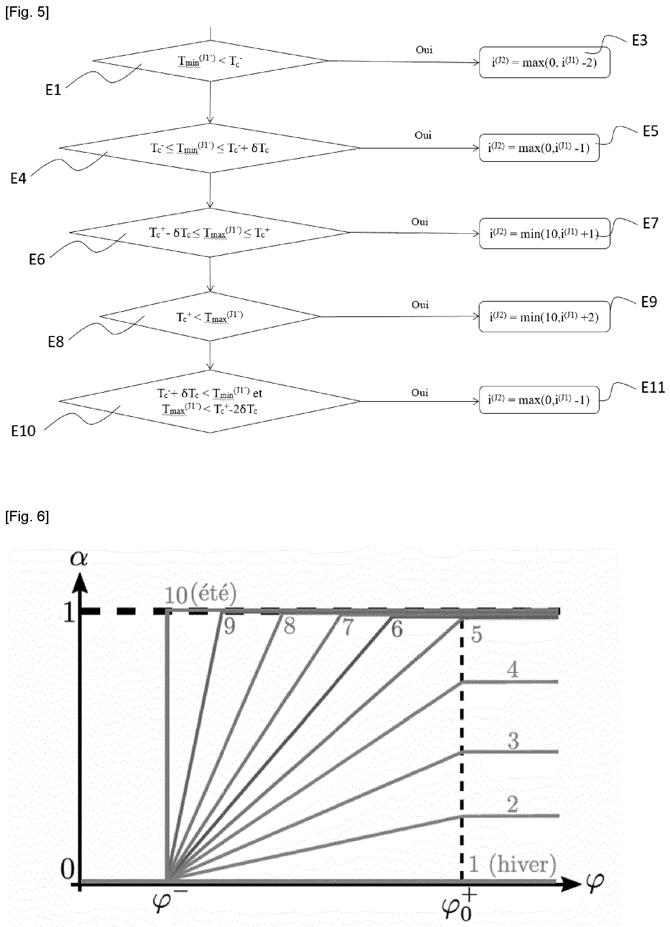

L'étape d'évaluation S3 est détaillée dans le diagramme de la figure 5 pour lequel on prend en compte, pour une période prédéfinie de 24 heures, les données suivantes, pour un fonctionnement sur la deuxième période de temps J2:
i^{(J1)} : l'indice du mode de pilotage de la première période de temps J1, par la suite appelé indice de la veille,
i^{(J2)} : l'indice du mode de pilotage de la deuxième période de temps J2, par la suite appelé indice du jour,
Tₘᵢₙ ^{(J1')} : la température intérieure minimale de la sous-période de la première période de temps, par la suite appelée température intérieure minimale de la veille ;
Tₘₐₓ ^{(J1')} : la température intérieure maximale de la sous-période de la première période de temps, par la suite appelée température intérieure maximale de la veille ;
T_{c}⁻ : la température minimum de la plage de température de confort
T_{c}⁺ : la température maximum de la plage de température de confort
δTc : la marge de réaction.

Un exemple d'algorithme utilisable dans le cadre du procédé est représenté en figure 5.

Dans une étape E1, on vérifie si la température intérieure minimale de la veille Tₘᵢₙ^{(J1')} est inférieure à la température minimum T_{c}⁻ de la plage de température de confort [T_{c}⁻, T_{c}⁺]. Si c'est le cas, dans une étape E3, l'indice du jour i^{(J2)} prend la valeur maximale entre 0 et i^{(J1)}-2. Autrement dit, la valeur de décalage est de -2. L'indice i du mode de pilotage du jour M_{i(J2)} diminue de 2 par rapport à celui de la veille M_{i(J1)}, sauf si le mode extrême minimum est ou était déjà atteint. Dans ce dernier cas, l'indice du mode du jour i^{(J2)} prend l'indice du mode extrême minimum.

Dans une étape E4, on vérifie si la température intérieure minimale de la veille Tₘᵢₙ^{(J1')} est comprise entre T_{c}⁻ et T_{c}⁻ + δTc. Si c'est le cas, dans une étape E5, l'indice du jour i^{(J2)} prend la valeur maximale entre 0 et i^{(J1)}-1. Autrement dit, l'indice i du mode de pilotage du jour M_{i(J2)} diminue de 1 par rapport à celui de la veille M_{iJ1}, sauf si le mode extrême minimum est ou était déjà atteint auquel cas l'indice du mode du jour i^{(J2)} prend l'indice du mode extrême minimum.

Dans une étape E6, on vérifie si la température intérieure maximale de la veille Tₘₐₓ ^{(J1')} est comprise entre T_{c}⁺ - δTc et T_{c}⁺. Si c'est le cas, dans une étape E7,l'indice du jour i^{(J2)} prend la valeur minimale entre 10 et i^{(J1)}+1. Autrement dit, l'indice i du mode du jour M_{i(J2)} augmente de 1 par rapport à celui de la veille M_{i(J1)}, sauf si le mode extrême maximum est ou était déjà atteint, auquel cas l'indice du mode du jour i^{(J2)} prend l'indice du mode extrême maximum.

Dans une étape E8, on vérifie si la température intérieure maximale de la veille Tₘₐₓ ^{(J1')} est supérieure à la température maximale de confort T_{c}⁺. Si c'est le cas, dans une étape E9, l'indice du jour i^{(J2)} prend la valeur minimale entre 10 et i^{(J1)} +2. Autrement dit, l'indice i du mode du jour M_{i(J2)} augmente de 2 par rapport à celui de la veille M_{i(J1),} sauf si le mode extrême maximum est ou était déjà atteint, auquel cas l'indice du mode du jour i^{(J2)} prend l'indice du mode extrême maximum.

Dans une étape E10, on vérifie si la température intérieure maximale de la veille Tₘₐₓ ^{(J1')} est supérieure à T_{c}⁻+ δTc et si la température intérieure maximale de la veille Tₘₐₓ ^{(J1')} est inférieure à T_{c}⁺ - 2 δTc. Si c'est le cas, dans une étape E11, l'indice du jour i^{(J2)} prend la valeur minimale entre 0 et i^{(J1)}-1. Autrement dit, l'indice i du mode du jour M_{i(J2)} diminue de 1 par rapport à celui de la veille M_{i(J1)}, sauf si le mode extrême maximum est ou était déjà atteint, auquel cas l'indice i du mode du jour i^{(J2)} prend l'indice du mode extrême maximum.

Les étapes du procédé décrites ci-dessus visent un choix de mode de pilotage de l'écran de protection solaire.

Les modes de pilotage Mᵢ eux-mêmes, qui correspondent à chacun des différents indices i de valeur du paramètre de contrôle dans l'ensemble discret ordonné de valeurs, peuvent être de différentes natures possibles. Notamment, un mode de pilotage peut fonctionner sur la base de différents algorithmes de gestion des apports solaires α. Les exemples ci-dessous ne sont pas limitatifs.

Selon un premier exemple simple, l'algorithme de gestion des apports solaires α est un algorithme basé sur un degré d'ouverture ou fermeture de la protection solaire. Ainsi, le mode de pilotage défini selon le procédé de l'invention permet de fournir un coefficient d'ouverture ou de fermeture d'un ouvrant ou d'une protection solaire selon l'indice i du mode défini Mᵢ.

Conformément à la figure 6, un autre exemple d'algorithme de gestion des apports solaires α peut être défini sur la base d'une absence d'occultation si l'énergie entrante est inférieure à une valeur d'un premier seuil φ⁻, par exemple inférieure à 50 Watts. Au-delà de ce premier seuil φ⁻, la protection solaire 3 est positionnée selon une pente théorique ayant pour origine la valeur du premier seuil φ⁻ d'énergie entrante et dont la pente est définie à partir d'un coefficient limitant ou degré de fermeture de la protection solaire 3 et un maximum de flux d'énergie φ⁺₀ entrant pour une ouverture totale à 100%, ainsi qu'expliqué ci-dessous.

Un mode de pilotage intermédiaire, entre les modes extrêmes, est considéré comme un mode mi-saison. Le mode mi-saison s'active lorsque le mode hiver M₁ conduit à des températures intérieures T trop élevées, ou lorsque le mode été M₁₀ conduit à une trop grande restriction du confort visuel, sans bénéfice sur le confort thermique. L'objectif d'un mode mi-saison est de maintenir le flux de puissance solaire φ entrante à un certain niveau quelque part entre un minimum φ⁻ et un maximum φ⁺₀. Le principe du mode mi-saison est qu'il est préférable de limiter continuellement au cours de la journée le flux de puissance φ entrant, juste au niveau suffisant, plutôt que de laisser entrer le flux φ sans aucune limite, et de réagir au dernier moment lorsque la température intérieure T se rapproche de l'une des valeurs extrêmes de la plage de température de confort [T_{c}⁻, T_{c}⁺], risquant d'entraîner une fermeture quasi-complète des protections solaires 3 et une dégradation importante et brutale du confort visuel. Pour le dire autrement, il est préférable de fermer partiellement la protection solaire 3 de façon homogène sur une longue période, plutôt que de la laisser entièrement ouverte et d'attendre une surchauffe pour la fermer fortement.

Selon le schéma de la figure 6, pour un coefficient limitant des apports solaires α de 0, nous retrouvons le mode Hiver, et pour le coefficient limitant des apports solaires α de 1, nous retrouvons le mode Été. Pour toutes autres valeurs intermédiaires, cela donne un continuum théorique passant progressivement d'un mode Été vers un mode hiver.

Avantageusement, on choisit pour cet algorithme un coefficient limitant des apports solaires α variable selon les indices i du mode de pilotage.

Avantageusement, on limite le flux d'énergie φ entrante au fur et à mesure que celui-ci augmente. De façon approximative, cela signifie en journée que les protections solaires 3 se ferment progressivement selon le niveau du rayonnement solaire.

Par exemple, le coefficient limitant des apports solaires α croit proportionnellement avec l'intensité du flux entrant φ, et plus précisément, au moins pour certains indices i de mode de pilotage.

Alternativement ou en complément, l'algorithme pourra intégrer un temps de réaction à l'ouverture ou à la fermeture, variable en fonction de l'indice i de mode de pilotage.

Dans les différents exemples de gestion automatique de manière générale, il est souhaitable d'ajouter un filtre temporel pour éviter des micromouvements.

Alors que les étapes relatives à la définition du mode de pilotage peuvent n'être basées que sur un paramètre de température intérieure T, l'algorithme de gestion automatique peut se baser sur d'autres paramètres. Il prend en compte avantageusement un capteur d'ensoleillement pour déterminer les flux d'énergie entrants disponibles, une horloge, qui permet de décliner le fonctionnement en mode sur certaines plages horaires, un capteur de température extérieure, et/ou des données météorologiques externes.

Selon un mode de réalisation, la valeur de décalage est pondérée par au moins un paramètre extérieur, notamment un paramètre de prévision météorologique, un paramètre de température extérieur, un paramètre de rayonnement solaire. Ceci permet notamment de prendre en compte les différences entre la température intérieure T et la température extérieure.

Dans une telle configuration, les flux énergétiques traversant la fenêtre seule ou traversant la fenêtre et la protection solaire 3 sont estimés. L'une des deux configurations favorisera davantage de flux entrant qu'une autre (généralement, le flux entrant est plus important avec la protection solaire repliée la journée, et c'est l'inverse la nuit).

Notons φ⁻ le flux minimum et φ⁺₀ le flux maximum. Dans le cas d'un coefficient limitant des apports solaires α qui ne dépend que des modes de pilotage, l'indice i du mode en cours placera les protections solaires dans une position de fermeture partielle de façon à avoir un flux entrant (pour i variant de 0 à 10) : [Math 2] $φ = \frac{i}{10} ∗ {φ}^{-} + \frac{10 - i}{10} ∗ {φ}_{0}^{+}$

Optionnellement, en utilisant les prédictions météorologiques, les étapes du procédé et en particulier la détermination de l'indice i du mode de pilotage peut être améliorée en adoptant une approche prédictive plutôt que réactive. La méthode sera plus efficace lorsque les conditions climatiques varient fortement d'une journée à l'autre.

Selon un mode de réalisation, après une première phase de fonctionnement selon les étapes ci-dessus, le procédé de gestion comprend une deuxième phase de fonctionnement dans lequel le mode de pilotage est déterminé en fonction des valeurs archivées et d'une température extérieure prévisionnelle. A chaque période prédéfinie, dans l'exemple chaque jour, les valeurs de température extérieure et d'illuminance extérieure (moyenne horaire) peuvent être archivées ainsi que l'indice i du mode de pilotage correspondant (après correction en début ou fin de période). On construit ainsi au fur et à mesure des jours un modèle de régression (un lien numérique) par apprentissage capable de prédire selon les conditions climatiques à venir, l'indice i du mode de pilotage le plus performant.

Selon un mode de réalisation, en plus de spécifier une plage de température de confort [T_{c}⁻, T_{c}⁺], l'utilisateur pourra spécifier une plage de confort lumineux (relatif par exemple à une quantité de lux) [L_{c}⁻, L_{c}⁺] par fenêtre/baie à maintenir/ne pas dépasser pour assurer un minimum de lumière naturelle et éviter les risques d'éblouissement. Le positionnement des protections solaires 3 selon l'étape de pilotage S1 devra respecter les contraintes de luminosité quand cela est possible ou s'en approcher au mieux.

Optionnellement, une gestion d'occupation/inoccupation du logement peut être ajoutée (via capteurs de présence, badge, agenda...) pour activer/désactiver la prise en compte du confort lumineux. En période d'inoccupation, cela permet d'assurer une gestion thermique optimale du bâtiment sans aucune contrainte de confort visuel.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention. tel que défini par les revendications .

## Revendications

1. Procédé de gestion d'une installation domotique (100) d'un bâtiment (1) comprenant au moins une protection solaire (3) motorisée, une unité de gestion (102) d'une position prise par la protection solaire (3) au cours du temps, et au moins un dispositif de mesure (104) d'une température intérieure du bâtiment (1), le procédé étant mis en œuvre par l'unité de gestion (102) et comprenant :
- une étape de pilotage (S1) sur une première période de temps (J1) dans laquelle la position de la protection solaire (3) est déterminée en fonction d'un premier mode de pilotage (M_{i(J1)}) prenant en compte au moins une première valeur i^{(J1)} d'un paramètre de contrôle, ledit paramètre de contrôle correspondant à une quantité d'apports solaires autorisés ;
- une étape de mesure (S2) de la température intérieure du bâtiment (1) pendant une sous-période (J1') de la première période de temps (J1) ;
- une étape d'évaluation (S3) d'une valeur de décalage dans laquelle la valeur de décalage est déterminée en fonction d'au moins un écart entre la température intérieure (T) du bâtiment (1) mesurée pendant la sous-période (J1') et une plage de température de confort ([T_{c}⁻, T_{c}⁺]) ;
- une étape d'ajustement (S4) dans laquelle un deuxième mode de pilotage M_{i(J2)} pour une deuxième période de temps (J2) successive à la première période de temps (J1) est déterminé en prenant en compte au moins une deuxième valeur i^{(J2)} du paramètre de contrôle, l'au moins une deuxième valeur i^{(J2)} du paramètre de contrôle étant déterminée en fonction de l'au moins une première valeur i^{(J1)} du paramètre de contrôle et de la valeur de décalage, le procédé étant **caractérisé en ce que** la première valeur i^{(J1)} et la deuxième valeur i^{(J2)} du paramètre de contrôle sont sélectionnées dans un ensemble discret ordonné de n valeurs i(^{jn)} du paramètre de contrôle correspondant chacune à un pourcentage d'apports solaires autorisé α tel que $α = \frac{i}{n} ∗ 100 %$, la valeur de décalage correspondant au nombre d'intervalle entre deux valeurs de l'ensemble discret de valeurs du paramètre de contrôle.

2. Procédé selon la revendication 1, dans lequel la valeur de décalage correspond à un décalage compris entre -5 intervalles et + 5 intervalles, et de préférence entre -2 intervalles et +2 intervalles dans l'ensemble discret ordonné de valeurs du paramètre de contrôle.

3. Procédé de gestion selon la revendication 1 ou 2, dans lequel l'ensemble discret ordonné de valeurs du paramètre de contrôle comprend entre 5 et 15 valeurs, de préférence 10 valeurs.

4. Procédé de gestion selon l'une quelconque des revendications 1 à 3, dans lequel le paramètre de contrôle varie uniformément sur l'ensemble discret de valeurs du paramètre de contrôle.

5. Procédé de gestion selon l'une quelconque des revendications précédentes, dans lequel la valeur de décalage est déterminée en fonction d'au moins une marge de réaction (δT_{c}) correspondant à un écart de température.

6. Procédé de gestion selon la revendication 5, dans lequel la valeur de décalage est déterminée en fonction d'au moins un écart entre la température intérieure (T) du bâtiment (1) et la plage de température de confort ([T_{c}⁻, T_{c}⁺]) augmentée ou diminuée de l'au moins une marge de réaction (δT_{c}).

7. Procédé de gestion selon la revendication 6, dans lequel la valeur de décalage est égale à -1 intervalle lorsque la température intérieure (T) du bâtiment est comprise entre la valeur minimum (T_{c}⁻) de la plage de température de confort ([T_{c}⁻, T_{c}⁺]) augmentée d'une première marge de réaction (δT_{c}) et la température maximum (T_{c}⁺) de la plage de température de confort ([T_{c}⁻, T_{c}⁺]) diminuée d'une deuxième marge de réaction (δT_{c}).

8. Procédé de gestion selon l'une quelconque des revendications précédentes, dans lequel la valeur de décalage est pondérée par au moins un paramètre extérieur, notamment un paramètre de prévision météorologique, un paramètre de température extérieur, un paramètre de rayonnement solaire.

9. Procédé de gestion selon l'une quelconque des revendications précédentes, dans lequel l'installation domotique (100) comprend également un élément actif de chauffage (106) ou de climatisation régulé sur une plage de température de régulation, la plage de température de confort ([T_{c}⁻, T_{c}⁺]) étant incluse dans la plage de température de régulation.

10. Procédé de gestion selon l'une quelconque des revendications précédentes, dans lequel pour chaque période de temps, au moins le mode de pilotage (Mᵢ) et/ou la première et/ou la deuxième valeur de paramètre de contrôle, et/ou la valeur de décalage sont archivés.

11. Procédé de gestion comprenant une première phase de fonctionnement selon la revendication 10, puis une deuxième phase de fonctionnement dans lequel le mode de pilotage (Mi) est déterminé en fonction des valeurs archivées et d'une température extérieure prévisionnelle.

12. Terminal d'une installation domotique (100) mettant en oeuvre un procédé selon l'une quelconque des revendications précédentes.

## Patentansprüche

1. Verfahren zur Verwaltung einer Hausautomatisierungsanlage (100) eines Gebäudes (1), umfassend mindestens einen motorisierten Sonnenschutz (3), eine Verwaltungseinheit (102) für eine Position, die der Sonnenschutz (3) im Laufe der Zeit einnimmt, und mindestens eine Vorrichtung (104) zur Messung einer Innentemperatur des Gebäudes (1), wobei das Verfahren von der Verwaltungseinheit (102) implementiert wird und Folgendes umfasst:
- einen Steuerschritt (S1) über einen ersten Zeitraum (J1), in dem die Position des Sonnenschutzes (3) in Abhängigkeit von einem ersten Steuermodus (M_{i(J1)}) bestimmt wird, der mindestens einen ersten Wert i^{(J1)} eines Steuerparameters berücksichtigt, wobei der Steuerparameter einer zulässigen Sonneneinstrahlungsmenge entspricht;
- einen Schritt des Messens (S2) der Innentemperatur des Gebäudes (1) während eines Teilzeitraums (J1') des ersten Zeitraums (J1);
- einen Schritt des Bewertens (S3) eines Offsetwerts, wobei der Offsetwert in Abhängigkeit von mindestens einer Abweichung zwischen der während des Teilzeitraums (J1') gemessenen Innentemperatur (T) des Gebäudes (1) und einem Komforttemperaturbereich ([T_{c}⁻, T_{c}⁺]) bestimmt wird;
- einen Anpassungsschritt (S4), bei dem ein zweiter Steuermodus M_{i(J2)} für einen zweiten Zeitraum (J2), der auf den ersten Zeitraum (J1) folgt, bestimmt wird, indem mindestens ein zweiter Wert i^{(J2)} des Steuerparameters berücksichtigt wird, wobei der mindestens eine zweite Wert i^{(J2)} des Steuerparameters in Abhängigkeit von dem mindestens einen ersten Wert i^{(J1)} des Steuerparameters und von dem Offsetwert bestimmt wird, wobei das Verfahren **dadurch gekennzeichnet ist, dass** der erste Wert i^{(J1)} und der zweite Wert i^{(J2)} des Steuerparameters aus einer diskreten geordneten Reihe von n Werten i^{(jn)} des Steuerparameters ausgewählt werden, die jeweils einem zulässigen Prozentsatz der Sonneneinstrahlung α entsprechen, so dass $α = \frac{i}{n} ∗ 100 %$ , wobei der Offsetwert der Anzahl von Intervallen zwischen zwei Werten der diskreten Reihe von Werten des Steuerparameters entspricht.

2. Verfahren nach Anspruch 1, wobei der Offsetwert einem Offset zwischen -5 Intervallen und + 5 Intervallen und vorzugsweise zwischen - 2 Intervallen und +2 Intervallen in der diskreten geordneten Reihe von Werten des Steuerparameters entspricht.

3. Verwaltungsverfahren nach Anspruch 1 oder 2, wobei die diskrete geordnete Reihe von Werten des Steuerparameters zwischen 5 und 15 Werten, vorzugsweise 10 Werte, umfasst.

4. Verwaltungsverfahren nach einem der Ansprüche 1 bis 3, wobei der Steuerparameter gleichmäßig über die diskrete Reihe von Werten des Steuerparameters variiert.

5. Verwaltungsverfahren nach einem der vorhergehenden Ansprüche, wobei der Offsetwert in Abhängigkeit von mindestens einer Reaktionsspanne (δT_{c}) bestimmt wird, die einer Temperaturabweichung entspricht.

6. Verwaltungsverfahren nach Anspruch 5, wobei der Offsetwert in Abhängigkeit von mindestens einer Abweichung zwischen der Innentemperatur (T) des Gebäudes (1) und dem Komforttemperaturbereich ([Tc⁻, Tc⁺]) zuzüglich oder abzüglich der mindestens einen Reaktionsspanne (δT_{c}) bestimmt wird.

7. Verwaltungsverfahren nach Anspruch 6, wobei der Offsetwert gleich - 1 Intervall ist, wenn die Innentemperatur (T) des Gebäudes zwischen dem Mindestwert (T_{c}⁻) des Komforttemperaturbereichs ([T_{c}⁻, T_{c}⁺]) zuzüglich einer ersten Reaktionsspanne (δT_{c}) und der Höchsttemperatur (T_{c}⁺) des Komforttemperaturbereichs ([T_{c}⁻, T_{c}⁺]) abzüglich einer zweiten Reaktionsspanne (δT_{c}) liegt.

8. Verwaltungsverfahren nach einem der vorhergehenden Ansprüche, wobei der Offsetwert durch mindestens einen äußeren Parameter, insbesondere einen Wetterprognoseparameter, einen Außentemperaturparameter oder einen Sonneneinstrahlungsparameter, gewichtet wird.

9. Verwaltungsverfahren nach einem der vorhergehenden Ansprüche, wobei die Hausautomatisierungsanlage (100) auch ein aktives Heiz (106) oder Klimatisierungselement umfasst, das auf einen Regeltemperaturbereich geregelt ist, wobei der Komforttemperaturbereich ([T_{c}⁻, T_{c}⁺]) in dem Regeltemperaturbereich enthalten ist.

10. Verwaltungsverfahren nach einem der vorhergehenden Ansprüche, wobei für jeden Zeitraum mindestens der Steuermodus (Mᵢ) und/oder der erste und/oder der zweite Steuerparameterwert und/oder der Offsetwert archiviert werden.

11. Verwaltungsverfahren, umfassend eine erste Betriebsphase nach Anspruch 10, dann eine zweite Betriebsphase, wobei der Steuermodus (Mi) in Abhängigkeit von den archivierten Werten und einer voraussichtlichen Außentemperatur bestimmt wird.

12. Endgerät einer Hausautomatisierungsanlage (100), das ein Verfahren nach einem der vorhergehenden Ansprüche implementiert.

## Claims

1. A method for managing a home automation installation (100) of a building (1) comprising at least one motorized solar shading device (3), a unit (102) for managing a position assumed by the solar shading device (3) over time, and at least one device (104) for measuring an indoor temperature of the building (1), the method being implemented by the management unit (102) and comprising:
- a piloting step (S1) over a first time period (J1) in which the position of the solar shading device (3) is determined as a function of a first piloting mode (M_{i(J1)}) taking into account at least one first value i^{(J1)} of a control parameter, said control parameter corresponding to a quantity of permitted solar gains;
- a step (S2) of measuring the indoor temperature of the building (1) during a sub-period (J1') of the first time period (J1);
- a step (S3) of evaluating an offset value, in which the offset value is determined as a function of at least one difference between the indoor temperature (T) of the building (1) measured during the sub-period (J1') and a comfort temperature range ([T_{c}⁻, T_{c}⁺]);
- an adjustment step (S4) in which a second piloting mode M_{i(J2)} for a second time period (J2) following the first time period (J1) is determined by taking into account at least one second value i^{(J2)} of the control parameter, the at least one second value i^{(J2)} of the control parameter being determined as a function of the at least one first value i^{(J1)} of the control parameter and the offset value, the method being
**characterized in that**
the first value i^{(J1)} and the second value i^{(J2)} of the control parameter are selected from an ordered discrete set of n values i^{(Jn)} of the control parameter, each corresponding to an authorized solar gain percentage α such that $α = \frac{i}{n} ∗ 100 %$, the offset value corresponding to the number of intervals between two values of the discrete set of values of the control parameter.

2. The method according to claim 1, wherein the offset value corresponds to an offset comprised between -5 intervals and +5 intervals, and preferably between -2 intervals and +2 intervals, within the ordered discrete set of values of the control parameter.

3. The management method according to claim 1 or 2, wherein the ordered discrete set of values of the control parameter comprises between 5 and 15 values, preferably 10 values.

4. The management method according to any one of claims 1 to 3, wherein the control parameter varies uniformly across the discrete set of values of the control parameter.

5. The management method according to any one of the preceding claims, wherein the offset value is determined as a function of at least one response margin (δT_{c}) corresponding to a temperature difference.

6. The management method according to claim 5, wherein the offset value is determined as a function of at least one difference between the indoor temperature (T) of the building (1) and the comfort temperature range ([T_{c}⁻, T_{c}⁺]) increased or decreased by the at least one response margin (δT_{c}).

7. The management method according to claim 6, wherein the offset value is equal to -1 interval when the indoor temperature (T) of the building is comprised between the minimum value (T_{c}⁻) of the comfort temperature range ([T_{c}⁻, T_{c}⁺]) increased by a first response margin (δT_{c}) and the maximum temperature (T_{c}⁺) of the comfort temperature range ([T_{c}⁻, T_{c}⁺]) decreased by a second response margin (δT_{c}).

8. The management method according to any one of the preceding claims, wherein the offset value is weighted by at least one external parameter, in particular a weather forecast parameter, an outdoor temperature parameter, or a solar radiation parameter.

9. The management method according to any one of the preceding claims, wherein the home automation installation (100) also comprise an active heating or air-conditioning element (106) regulated within a regulation temperature range, the comfort temperature range ([T_{c}⁻, T_{c}⁺]) being included within the regulation temperature range.

10. The management method according to any one of the preceding claims, wherein, for each time period, at least the piloting mode (Mᵢ) and/or the first and/or second control parameter value, and/or the offset value are archived.

11. The management method comprising a first operating phase according to claim 10, followed by a second operating phase in which the piloting mode (Mi) is determined as a function of the archived values and a forecast outdoor temperature.

12. A terminal of a home automation installation (100) implementing a method according to any one of the preceding claims.
